# EUROPÄISCHE PATENTSCHRIFT

(11) **EP 0 584 632 B1**
(45) Veröffentlichungstag und Bekanntmachung des Hinweises auf die Patenterteilung: **01.05.1996**
(21) Anmeldenummer: 93112779.9
(22) Anmeldetag: 10.08.1993
(51) Int. Cl.: C08F 20/12

(54) **Verfahren zur Herstellung von Suspensionspolymerisaten auf der Basis von Acrylaten und Methacrylaten**
Process for preparing polymers in suspension based on acrylates and methacrylates
Procédé de fabrication des polymères en suspension à base d'acrylates et de méthacrylates

(30) Priorität: 22.08.1992 DE 4227869
(43) Veröffentlichungstag der Anmeldung: 02.03.1994
(73) Patentinhaber: BASF Aktiengesellschaft, D-67063 Ludwigshafen (DE)
(72) Erfinder: Deckers, Andreas, Dr., D-6700 Ludwigshafen (DE); Guentherberg, Norbert, Dr., D-6720 Speyer (DE)

(56) Entgegenhaltungen:
- US-A- 4 972 036

## Beschreibung

Die vorliegende Erfindung betrifft ein Verfahren aus Herstellung von Polymerisaten aus
- 50 bis 100 Gew.-%: mindestens einer Verbindung, ausgewählt aus der Gruppe bestehend aus C₁-C₁₈-Alkylestern der Acrylsäure und Methacrylsäure und
- 0 bis 50 Gew.-%: weiteren radikalisch polymerisierbaren Monomeren,
durch Suspensionspolymerisation, dadurch gekennzeichnet, daß man die Polymerisation in Gegenwart eines Puffers, ausgewählt aus der Gruppe, bestehend aus Zitronensäure, Alkalimetallzitraten, Erdalkalimetallzitraten und Ammoniumzitraten durchführt.

Die Suspensionspolymerisation von Estern der Acryl- und Methacrylsäure sowie von Monomermischungen, die überwiegend aus solchen Monomeren bestehen, ist beispielsweise aus Houben-Weyl, "Methoden der Organischen Chemie", 4.Auflage, Bd. XIV/1, Georg Thieme Verlag, Stuttgart 1961, Seiten 406 bis 433, bekannt. Da im allgemeinen während der Suspensionspolymerisation durch Verwendung von sauren Monomeren bzw. durch Teilverseifung der Acryl- oder Methacrylester zur freien Säure der pH-Wert sinkt, puffert man in der Regel die - meist wäßrige - Reaktionsmischung. Durch diese Maßnahme verhindert man im allgemeinen die Ausfällung des Schutzkolloids, welches man zur Stabilisierung der Suspension bevorzugt zusetzt.

Aus Kostengründen und aufgrund seiner guten Pufferkapazität verwendet man in der Regel ein phosphathaltiges Puffersystem, das den pH-Wert im Bereich von 6 bis 8 stabilisiert.

Nachteilig bei Phosphat-Puffern ist allerdings, daß trotz der üblichen Reinigungsoperationen geringe Mengen des Puffers im Polymeren verbleiben und so die Wasseraufnahme und die optischen Eigenschaften, insbesondere bei transparenten Kunststoffen, wie Gelbwertindex und Trübung, ungünstig beeinflussen. Polymere mit einem zu hohen Wassergehalt führen im allgemeinen bei einer späteren Verarbeitung beispielsweise durch Spritzgießen oder Extrusion zu unbefriedigenden Produkteigenschaften, da sich z.B. Lunker, Schlieren oder Bläschen bilden können.

Der Erfindung lag daher die Aufgabe zugrunde, Suspensionspolymerisate auf der Basis von Acrylaten und Methacrylaten, die verbesserte optische Eigenschaften und eine geringere Wasseraufnahme aufweisen als bekannte Suspensionspolymerisate auf der Basis von Acrylaten und Methacrylaten, zur Verfügung zu stellen.

Demgemäß wurde das eingangs definierte Verfahren gefunden.

Die Polymerisation nimmt man im allgemeinen in an sich bekannter Weise nach der Methodik der Suspensionspolymerisation vor. Dazu kann man beispielsweise die Wasser- und Monomerphase unter Zusatz von üblichen Dispergiermitteln vorlegen und den Initiator zugeben. Man kann aber auch, bevorzugt bei diskontinuierlicher Arbeitsweise, die Wasserphase, welche das Dispergiermittel, den Puffer sowie gewünschtenfalls andere Zusätze bereits enthält, vorlegen und die Monomerphase, die in der Regel bereits die monomerlöslichen Zusatzstoffe wie Initiatoren, Kettenregler oder Gleitmittel gelöst enthält, vorzugsweise unter Rühren zugeben. Der im allgemeinen im Polymerisationssystem vorhandene Sauerstoff entfernt man zweckmäßig durch Evakuieren, anschließendes Aufpressen eines Inertgases und nachfolgendes Entspannen. In der Regel startet man die Polymerisation thermisch.

Als Puffer verwendet man erfindungsgemäß Zitronensäure und deren wasserlösliche Salze, bevorzugt Alkalimetall- und Erdalkalimetallzitrate sowie Ammoniumzitrate. Beispielhaft seien genannt: Lithium-, Natrium-, Kaliumdihydrogenzitrat, Dilithium-, Dinatrium-, Dikalium-, Diammonium-, Magnesium-, Calciumhydrogenzitrat, Trilithium-, Trinatrium-, Trikalium-, Triammoniumzitrat, Trimagnesium- und Tricalciumdizitrat.

Vorzugsweise setzt man eine Mischung von Zitronensäure und einem der oben genannten Salze ein, wobei eine Mischung aus Zitronensäure und einem Trialkalimetallzitrat, besonders bevorzugt Trinatriumzitrat, bevorzugt wird.

Die Menge an Puffer liegt im allgemeinen im Bereich von 0,001 bis 2 Gew.-%, bevorzugt von 0,001 bis 1 Gew.-%, besonders bevorzugt von 0,002 bis 0,1 Gew.-%. Bei einer Mischung aus Zitronensäure und eines ihrer Salze wählt man das Molverhältnis von Zitrat zu Zitronensäure - je nach gewünschtem pH-Wert - im allgemeinen im Bereich von 100:1 bis 1:1.

Als Ester der Acrylsäure verwendet man erfindungsgemäß die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren.

Als Ester der Methacrylsäure verwendet man erfindungsgemäß die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylmethacrylat, bevorzugt Methylmethacrylat, sowie Mischungen dieser Monomeren.

Die Verwendung von hydroxy-, epoxy- und aminofunktionellen Methacrylaten und Acrylaten ist im erfindungsgemäßen Verfahren ebenfalls möglich.

Die Acrylate und Methacrylate sowie Mischungen davon setzt man erfindungsgemäß in Mengen im Bereich von 50 bis 100, bevorzugt von 80 bis 99 Gew.-%, bezogen auf die Gesamtmenge an Monomeren ein.

Als weitere Comonomere kann man bis zu 50 Gew.-%, bevorzugt von 1 bis 20 Gew.-%, der folgenden beispielhaft aufgeführten Monomeren einsetzen:
- Vinylaromaten wie Styrol, alpha-Methylstyrol, Vinyltoluol oder p-tert.-Butylstyrol;
- Acryl- und Methacrylsäure;
- Acryl- und Methacrylamid;
- Maleinsäure sowie deren Imide und C₁-C₁₀-Alkylester;
- Fumarsäure sowie deren Imide und C₁-C₁₀-Alkylester;
- Itakonsäure sowie deren Imide und C₁-C₁₀-Alkylester;
- Acryl- und Methacrylnitril.

Zweckmäßigerweise wählt man die Monomeren so aus, daß das gebildete Polymerisat eine Glasübergangstemperatur von mindestens 30°C aufweist, um ein Verkleben der gebildeten Polymerisatperlen zu vermeiden.

Als besonders vorteilhaft haben sich nach bisherigen Beobachtungen Polymerisate aus 80 bis 100 Gew.-% Methylmethacrylat und 0 bis 20 Gew.-% Methylacrylat in einem Molekulargewichtsbereich von Mₙ (Zahlenmittel) 20.000 bis 300.000 g/mol erwiesen.

Die Polymerisation führt man in der Regel in Gegenwart von bis zu 5, bevorzugt von 0,001 bis 1, besonders bevorzugt von 0,01 bis 0,5 Gew.-%, bezogen auf das in der Reaktionsmischung vorhandene Wasser, Dispergiermitteln durch. Als Dispergiermittel kann man Polymerisate der Acryl- und Methacrylsäure, oder Copolymerisate, die sich zu wenigstens 50 Gew.-% aus diesen Säuren herleiten und daneben noch bis zu 50 Gew.-% an Monomerbausteinen enthalten, die mit diesen Säuren copolymerisierbar sind, wie Methylmethacrylat, einsetzen. Diese Polymerisate kann man als (Poly-)Säure oder als Alkalimetall- oder Ammoniumsalze einsetzen, wobei die Alkalimetallsalze bevorzugt sind. Insbesondere eignen sich nach den bisherigen Beobachtungen Polymerisate aus 60 bis 70 Gew.-% Methacrylsäure und 30 bis 40 Gew.-% Methylmethacrylat, deren freie Carboxylgruppen mit Natronlauge neutralisiert sind.

Des weiteren kann man auch Polyvinylalkohol, Polyvinylpyrrolidon, Pektine, Gelatine, Methylcellulose oder andere Celluloseether als Dispergiermittel einsetzen.

Die Dispergiermittel kann man vorteilhaft als 1 bis 30 gew.-%ige wäßrige Lösungen der Wasserphase zusetzen.

Als Polymerisationsinitiatoren, die man in der Regel der Monomerphase zusetzt, verwendet man im allgemeinen übliche Radikalstarter wie Peroxide und Azoverbindungen, wobei man bevorzugt solche auswählt, deren Zerfallstemperaturen, d.h. Temperaturen, bei denen nach einer Stunde die Hälfte des Initiators zerfallen ist, unterhalb von 150°C liegen. Unter Umständen kann es dabei von Vorteil sein, auch ein Gemisch verschiedener Initiatoren einzusetzen. Die Einsatzmenge liegt in der Regel im Bereich von 0,1 bis 5 Gew.-%, bezogen auf die Gesamtmenge an Monomeren.

Als Peroxid-Initiatoren eignen sich beispielsweise Peroxidicarbonate, Peroxiester, Diacylperoxide, Monoperoxicarbonate, Perketale und Dialkylperoxide. Nach den bisherigen Beobachtungen besonders geeignet sind Dilaurylperoxid, t-Butyl-per-2-ethylhexanoat, t-Butyl-per-3,5,5-trimethylhexanoat, 2,2-Bis(t-butylperoxi)butan, 1,1-Bis(t-butylperoxi)cyclohexan und Dibenzoylperoxid.

Als Azoverbindungen kann man Azobisisobuttersäurenitril oder Azobis(2,4-dimethyl)valeronitril einsetzen.

Eine Verbesserung hinsichtlich einer möglichst engen Molmassenverteilung erzielt man durch übliche Mitverwendung von Molmassereglern in Mengen von bis zu 10 Gew.-%, bevorzugt von 0,1 bis 0,5 Gew.-%. Beispielsweise seien genannt:
- Mercaptane wie n-Butylmercaptan, n-Octylmercaptan, n-Dodecylmercaptan oder tert.-Dodecylmercaptan;
- Thioglykolsäureester wie Thioglykolsäureisooctylester oder Thioglykolsäurelaurylester;
- aliphatische Chlorverbindungen, Enolether oder dimeres alphaMethylstyrol.

Das Gewichtsverhältnis von Wasser zu Monomer(e) wählt man im allgemeinen im Bereich von 4:1 bis 1:1, bevorzugt von 2:1 bis 1:1.

Die Polymerisation führt man in der Regel bei einer Temperatur im Bereich von 60 bis 150, bevorzugt von 80 bis 130°C, und einem Druck im Bereich von 100 bis 1000, bevorzugt von 500 bis 1000 kPa, durch.

Je nach gewähltem Monomer/Wasser-Verhältnis führt man die Polymerisation adiabatisch oder unter zumindest teilweiser Abführung der Polymerisationswärme durch Kühlung durch.

Den pH-Wert der Reaktionsmischung wählt man in der Regel im Bereich von 6 bis 8, bevorzugt von 6,5 bis 7,5.

Im übrigen kann man der Reaktionsmischung oder dem Polymerisat die üblichen, dem Fachmann bekannten Zusatzstoffe und Verarbeitungshilfsmittel wie Wärme- und UV-Stabilisatoren, Antioxidantien, Entformungshilfsmittel, Gleitmittel, Antistatika und Färbemittel zusetzen.

Die Polymerisate kann man in der Regel nach bekannten Methoden durch Ausfällung, Filtration, Dekantieren oder Zentrifugieren und anschließender Trocknung, beispielsweise in einem Trockenofen oder in einem Wirbelschichttrockner, aufarbeiten, wobei man gewünschtenfalls bei Bedarf die Polymerisationsperlen vorzugsweise mit Wasser wäscht.

Das getrocknete Polymerisat kann man durch übliche Verarbeitungsverfahren wie Extrudieren, Kalandrieren oder Spritzgießen zu Formkörpern weiterverarbeiten.

Die nach dem erfindungsgemäßen Verfahren hergestellten Polymerisate weisen gegenüber bekannten Polymeren auf der Basis von (Meth)Acrylaten verbesserte optische Eigenschaften wie Trübung und Gelbwertindex und eine geringere Wasseraufnahme auf.

### Beispiele

### Beispiele 1 bis 3

Eine Mischung aus 1680 g vollentsalztem Wasser, 13,9 g des Natriumsalzes eines Copolymerisates hergestellt aus 64 Gew.-% Methacrylsäure und 36 Gew.-% Methylmethacrylat, 7,0 g Trinatriumzitrat-Dihydrat, 1400 g Monomer bzw. Monomermischung wie in Tabelle 1 angegeben, 3,4 g n-Dodecylmercaptan und 2,6 g Dilaurylperoxid wurde zunächst bei Raumtemperatur inertisiert, indem an das die Reaktionsmischung enthaltende Reaktionsgefäß mehrmals ein Unterdruck angelegt und anschließend das Reaktionssystem jeweils mit Stickstoff auf Normaldruck gebracht wurde. Dann wurde die Reaktionsmischung unter Rühren auf 80°C erhitzt und 6 h bei dieser Temperatur belassen. Nach dem anschließenden Abkühlen auf Raumtemperatur wurde die gebildeten Polymerisatperlen abfiltriert, dann mit etwa 2 l vollentsalztem Wasser gewaschen und bei 80°C getrocknet.

### Beispiel 4

Es wurde wie in Beispiel 2 gearbeitet, mit dem Unterschied, daß anstelle des Trinatriumzitrats eine Mischung aus 5 g Trinatriumzitrat-Dihydrat und 2 g Zitronensäure als Puffer eingesetzt wurde.

### Vergleichsbeispiel 1

Es wurde wie in Beispiel 2 gearbeitet, mit dem Unterschied, daß anstelle des Trinatriumzitrats 7 g Natriumphosphathydrat als Puffer eingesetzt wurde.

### Vergleichsbeispiel 2

Es wurde wie in Beispiel 2 gearbeitet, mit dem Unterschied, daß kein Puffer eingesetzt wurde.

Aus den Polymerisaten wurden nach bekannter Art Formkörper durch Spritzgießen hergestellt und anschließend folgende Materialprüfungen durchgeführt:
- die Messung der Trübung (Haze) erfolgte an Rundscheiben mit 80 mm Durchmesser und 6 mm Höhe nach DIN 5036,
- die Gelbwertindex-Messungen wurden an Rundscheiben mit 80 mm Durchmesser und 6 mm Höhe nach DIN 5036 durchgeführt und
- die Feuchtigkeitsaufnahme nach 20 Tagen bei 60°C wurde analog zu DIN 53 471 an Normkleinstäben durchgeführt
- die Bestimmung der Perlgrößenverteilung, ausgedrückt durch den Gleichmäßigkeitskoeffizienten n, erfolgte gemäß Siebanalyse und Erstellung einer Siebrückstandskurve (nach Rosin-Rammler-Puffe)
- die Bestimmung des statistischen Korndurchmessers d' erfolgte nach Rosin-Rammler-Puffe (s. Ullmann, Enzyklopädie der techn. Chemie, 3. Aufl. Bd. 1, 1951, S. 639 ff).

Die Ergebnisse der einzelnen Qualitätsprüfungen sind der nachstehenden Tabelle zu entnehmen.

**Tabelle**

| Beispiel | Puffer | Monomer Gew.-Tl. | Trübung [%] | Gelbindex | H₂O-Aufn. [%] | n | d' [mm] |
|---|---|---|---|---|---|---|---|
| 1 | Na-Zitrat | 100 MMA | 0,5 | 0,3 | 1,1 | 4,9 | 0,53 |
| 2 | Na-Zitrat | 99 MMA | 0,5 | 0,3 | 1,2 | 4,9 | 0,50 |
| | | 1 MA | | | | | |
| 3 | Na-Zitrat | 86 MMA | 0,6 | 0,3 | 1,5 | 4,8 | 0,48 |
| | | 14 MA | | | | | |
| 4 | Na-Zitrat/ Zitronensäure | 99 MMA | 0,3 | 0,3 | 0,9 | 4,9 | 0,52 |
| | | 1 MA | | | | | |
| Vgl.-Bsp. 1 | Phosphat | 99 MMA | 0,8 | 0,4 | 2,0 | 3,9 | 0,29 |
| | | 1 MA | | | | | |
| Vgl.-Bsp. 2 | ohne | 99 MMA | Ansatz koaguliert | | | - | - |
| | | 1 MA | | | | | |

Je größer n und d', desto günstiger ist die spätere Aufarbeitung beispielsweise durch Dekantieren, Zentrifugieren, Trocknen oder Granulieren.

## Patentansprüche

1. Verfahren zur Herstellung von Polymerisaten aus
50 bis 100 Gew.-% mindestens einer Verbindung, ausgewählt aus der Gruppe bestehend aus C₁-C₁₈-Alkylestern der Acrylsäure und Methacrylsäure und
0 bis 50 Gew.-% weiteren radikalisch polymerisierbaren Monomeren,
durch Suspensionspolymerisation, dadurch gekennzeichnet, daß man die Polymerisation in Gegenwart eines Puffers, ausgewählt aus der Gruppe, bestehend aus Zitronensäure, Alkalimetallzitraten, Erdalkalimetallzitraten, Ammoniumzitraten durchgeführt.

2. Verfahren nach Anspruch 1, dadurch gekennzeichnet, daß man 0,001 bis 2 Gew.-% Puffer, bezogen auf das in der Reaktionsmischung vorhandene Wasser, einsetzt.

3. Verfahren nach den Ansprüchen 1 oder 2, dadurch gekennzeichnet, daß man als Puffer eine Mischung aus Zitronensäure und Trinatriumzitrat verwendet.

## Claims

1. A process for preparing polymers comprising
50 to 100% by weight of at least one compound selected from the group consisting of C₁-C₁₈-alkyl esters of acrylic acid and methacrylic acid, and
0 to 50% by weight of further, free-radically polymerizable monomers,
by suspension polymerization, which comprises carrying out the polymerization in the presence of a buffer selected from the group consisting of citric acid, alkali metal citrates, alkaline earth metal citrates and ammonium citrates.

2. A process as claimed in claim 1, wherein 0.001 to 2% by weight of buffer, based on the water present in the reaction mixture, is used.

3. A process as claimed in claim 1 or 2, wherein as buffer a mixture of citric acid and trisodium citrate is used.

## Revendications

1. Procédé de préparation de polymères de
50 à 100% en poids d'au moins un composé choisi dans le groupe constitué par les esters alkyliques en C₁-C₁₈ de l'acide acrylique et de l'acide méthacrylique, et de
0 à 50% en poids d'autres monomères susceptibles de polymérisation radicalaire,
par polymérisation en suspension, caractérisé en ce que l'on conduit la polymérisation en présence d'un tampon choisi dans le groupe constitué par l'acide citrique, des citrates de métaux alcalins, des citrates de métaux alcalino-terreux et des citrates d'ammonium.

2. Procédé selon la revendication 1, caractérisé en ce que l'on utilise de 0,001 à 2% en poids de tampon, par rapport à l'eau présente dans le mélange réactionnel.

3. Procédé selon la revendication 1 ou 2, caractérisé en ce que l'on utilise, comme tampon, un mélange d'acide citrique et de citrate trisodique.
